# EUROPÄISCHE PATENTSCHRIFT

(11) **EP 2 983 559 B1**
(45) Veröffentlichungstag und Bekanntmachung des Hinweises auf die Patenterteilung: **13.06.2018**
(21) Anmeldenummer: 14723308.4
(22) Anmeldetag: 26.03.2014
(51) Int. Cl.: A47B 88/463

(54) **ANTRIEBSVORRICHTUNG FÜR EIN BEWEGBARES MÖBELTEIL**
DRIVE DEVICE FOR A MOVABLE FURNITURE PART
DISPOSITIF D'ENTRAÎNEMENT POUR ÉLÉMENT DE MEUBLE MOBILE

(30) Priorität: 12.04.2013 AT 2952013
(43) Veröffentlichungstag der Anmeldung: 17.02.2016
(73) Patentinhaber: Julius Blum GmbH, 6973 Höchst (AT)
(72) Erfinder: BRUNNMAYR, Harald, 6912 Hörbranz (AT) (AT)
(74) Vertreter: Torggler & Hofinger Patentanwälte
(86) Internationale Anmeldenummer: PCT/AT2014/000058
(87) Internationale Veröffentlichungsnummer: WO 2014/165876

(56) Entgegenhaltungen:
- EP-A1- 1 921 948
- US-A1- 2007 090 735

## Beschreibung

Die Erfindung betrifft eine Antriebsvorrichtung für ein bewegbares Möbelteil, mit einer verriegelbaren Ausstoßvorrichtung, wobei die Ausstoßvorrichtung einen kraftbeaufschlagten Ausstoßhebel zum Ausstoßen des bewegbaren Möbelteils entlang eines Ausstoßabschnitts aus einer Schließstellung in eine Offenstellung aufweist, wobei der Ausstoßhebel an einer Ausstoßhebelgrundplatte drehbar gelagert ist, wobei ein Ausstoßkraftspeicher den Ausstoßhebel kraftbeaufschlagt und wobei der Ausstoßhebel in der Schließstellung an einem Verriegelungselement in einer Verriegelungsposition anliegt und wobei durch Bewegen des bewegbaren Möbelteils in eine in Schließrichtung hinter der Schließstellung liegende Überdrückstellung die Ausstoßvorrichtung entriegelbar ist, indem das Verriegelungselement einen ersten Weg in den Ausstoßabschnitt für den Ausstoßhebel freigibt. Zudem betrifft die Erfindung ein Möbel mit einer solchen Antriebsvorrichtung.

In der Möbelbeschlägeindustrie gibt es bereits seit vielen Jahren sogenannte Touch-Latch-Mechanismen, mit denen durch Drücken auf das in der Schließstellung befindliche bewegbare Möbelteil (z. B. Schublade, Möbeltüre, Möbelklappe oder Ähnliches) eine Entriegelung erfolgt, wonach das bewegbare Möbelteil in Öffnungsrichtung durch den Mechanismus (Ausstoßvorrichtung) aktiv ausgestoßen wird. Für die Verriegelung und für das Ausstoßen gibt es dabei unterschiedliche Ausführungsvarianten.

Eine erste gattungsfremde Variante ist dabei die Verriegelung eines Ausstoßelements über einen in einer herzkurvenförmigen Führungsbahn verriegelbaren Führungszapfen. Dabei ist die Funktion des Verriegelns und die Funktion des Ausstoßens auf verschiedene Komponenten aufgeteilt. Einerseits dient der Verriegelungszapfen der Verriegelung in der herzkurvenförmigen Führungsbahn, andererseits dient ein separates federbeaufschlagtes Ausstoßelement zum Ausstoßen des bewegbaren Möbelteils nach dem Entriegeln durch Überdrücken. Ein Beispiel dafür ist die WO 2012/149587 A1. Auch die US 2007/0090735 A1 kann als Beispiel genannt werden. Generell besteht bei Touch-Latch-Mechanismen auch oft der Wunsch, dass ein Entriegeln nicht nur durch Überdrücken, sondern auch durch Ziehen am bewegbaren Möbelteil gewährleistet wird. Dies wird bei dieser gattungsfremden WO 2012/149587 A1 dadurch erreicht, dass im Bereich der Rastmulde der herzkurvenförmigen Führungsbahn ein federbeaufschlagtes Blockierelement angeordnet ist, das beim Ziehen am bewegbaren Möbelteil vom Verriegelungszapfen - bewegt wird, wodurch ein- zweiter Entriegelungskanal freigegeben wird. Dadurch ist bei einem solchen Touch-Latch-Mechanismus sowohl das Entriegeln durch Überdrücken als auch das Entriegeln durch Ziehen und anschließendem aktiven Ausstoßen realisiert.

Nun besteht der Wunsch auch bei gattungsbildenden Touch-Latch-Mechanismen mit einem Ausstoßhebel eine solche Auslösung durch Ziehen zu realisieren. Als Beispiele für bisher bekannte Antriebsvorrichtungen bei denen der Ausstoßhebel eine Doppelfunktion aufweist, nämlich dass der Ausstoßhebel selbst sowohl verriegelt wird als auch ausstößt, sind aus der EP 1 921 948 A1, der WO 2011/143682 A1 und der anmeldereigenen, nicht vorveröffentlichten österreichischen A 1249/2012 bekannt. Bei diesen Antriebsvorrichtungen bzw. Touch-Latch-Mechanismen liegt ein Ausstoßhebel in der Schießstellung an einem Verriegelungselement an und wird durch Überdrücken in die Überdrückstellung von diesem Verriegelungselement gelöst, sodass der Weg in einen Ausstoßabschnitt freigegeben wird, indem der Ausstoßhebel sich an einer Ausstoßfläche abstößt. Es ist zwar möglich, dass bei diesen Mechanismen das bewegbare Möbelteil auch durch Ziehen geöffnet wird, jedoch erfolgt beim Öffnen durch Ziehen kein aktives Ausstoßen durch einen Ausstoßkraftspeicher.

Die Aufgabe der vorliegenden Erfindung liegt daher darin, bei einer gattungsgemäßen Antriebsvorrichtung auch ein Auslösen durch Ziehen zu realisieren.

Dies wird durch eine Antriebsvorrichtung mit den Merkmalen von Anspruch 1 gelöst. Demnach ist vorgesehen, dass die Ausstoßvorrichtung durch Ziehen am bewegbaren Möbelteil von der Schließstellung in eine in Öffnungsrichtung vor der Schließstellung liegende Zugentriegelungsstellung bringbar ist, wodurch der Ausstoßhebel über einen vom ersten Weg beabstandeten zweiten Weg in den Ausstoßabschnitt gelangt. Somit gelangt der Ausstoßhebel selbst über einen zweiten Weg in den Ausstoßabschnitt. Es kann also das Verriegelungselement nicht nur auf einer Seite, sondern auf zwei Seiten umfahren werden, sodass anschließend der Ausstoßhebel aktiv das bewegbare Möbelteil ausstößt.

Sobald sich der Ausstoßhebel im Ausstoßabschnitt befindet, ist bevorzugt vorgesehen, dass vom kraftbeaufschlagten Ausstoßhebel über eine Hauptausstoßfläche das bewegbare Möbelteil in Öffnungsrichtung bewegbar ist.

Grundsätzlich kann vorgesehen sein, dass sich der Ausstoßhebel beim Entriegeln durch Ziehen nach Umfahren des Verriegelungselements entlang dem zweiten Weg auch an der Hauptausstoßfläche abstößt. Bevorzugt ist allerdings vorgesehen, dass entlang des zweiten Wegs eine von der Hauptausstoßfläche beabstandete zweite Ausstoßfläche ausgebildet ist. Besonders bevorzugt ist dabei für eine einfache Konstruktion vorgesehen, dass die zweite Ausstoßfläche am Verriegelungselement ausgebildet ist. Natürlich kann sich der Ausstoßhebel beim Entriegeln durch Ziehen auch nacheinander an der zweiten Ausstoßfläche und dann an der Hauptabstoßfläche abstoßen oder nur an der zweiten Ausstoßfläche.

Bei einem bevorzugten Ausführungsbeispiel ist vorgesehen, dass der Ausstoßkraftspeicher eine an einem Schenkel des Ausstoßhebels angreifende Zugfeder ist. Der Ausstoßkraftspeicher ist dabei einerseits am Ausstoßhebel und andererseits an der Ausstoßhebelgrundplatte befestigt.

Weiters kann bevorzugt vorgesehen sein, dass die Antriebsvorrichtung eine Führungsbahn für den Ausstoßhebel aufweist, wobei die Führungsbahn einen Freilaufabschnitt, einen Spannabschnitt zum Spannen des Ausstoßkraftspeichers, einen Einziehabschnitt zum Einziehen des bewegbaren Möbelteils aus einer Offenstellung in die Schließstellung, den ersten Weg, den zweiten Weg und den Ausstoßabschnitt aufweist, wobei der Spannabschnitt und der Einziehabschnitt vom ersten Weg und vom zweiten Weg verschieden sind.

Weiters ist bei einem bevorzugten Ausführungsbeispiel der vorliegenden Erfindung eine Steuerplatte und ein an der Steuerplatte bewegbar gelagertes Steuerelement vorgesehen, wobei das Steuerelement zumindest den Spannabschnitt und den Einziehabschnitt mitbildet. Bevorzugt bildet diese Steuerplatte im Wesentlichen die Führungsbahn mit. Hierzu kann weiters bevorzugt vorgesehen sein, dass das Steuerelement von einem Kraftspeicher beaufschlagt ist, der das Steuerelement in eine von der Hauptausstoßfläche wegweisende Richtung beaufschlagt. Dabei ist der Kraftspeicher einerseits am Steuerelement und andererseits an der Steuerplatte befestigt. Gemäß einem Ausführungsbeispiel ist dieser Kraftspeicher als Zugfeder ausgebildet.

Zudem ist bevorzugt vorgesehen, dass das Verriegelungselement relativ zur Steuerplatte bewegbar, vorzugsweise verschiebbar, gelagert ist, wobei besonders bevorzugt das Verriegelungselement am Steuerelement bewegbar gelagert ist. Um auch eine Bewegung des Verriegelungselements relativ zum Steuerelement zu ermöglichen ist vorgesehen, dass das Verriegelungselement von einem das Verriegelungselement in Richtung Steuerelement ziehenden Kraftspeicher beaufschlagt ist. Auch dieser Kraftspeicher ist bevorzugt als Zugfeder ausgebildet, wobei dieser Kraftspeicher einerseits am Verriegelungselement und andererseits am Steuerelement befestigt ist.

Aufgrund dieser Ausbildung des Steuerelements und des Verriegelungselements kann vorgesehen sein, dass der erste Weg zwischen dem Verriegelungselement und der Hauptausstoßfläche und der zweite Weg zwischen dem Verriegelungselement und dem Steuerelement angeordnet ist.

Weiters wird Schutz begehrt für ein Möbel mit einem Möbelkorpus, einem bewegbaren Möbelteil und einer erfindungsgemäßen Antriebsvorrichtung. Bei einem solchen Möbelteil ist bevorzugt vorgesehen, dass das bewegbare Möbelteil am Möbelkorpus über eine Ausziehführung bewegbar gelagert ist, wobei die Ausziehführung zumindest eine Korpusschiene und eine Ladenschiene aufweist.

Grundsätzlich kann der Ausstoßhebel der Ausstoßvorrichtung dem Möbelkorpus zugeordnet sein und das bewegbare Möbelteil aktiv ausstoßen. Gemäß einem bevorzugten Ausführungsbeispiel ist allerdings vorgesehen, dass der Ausstoßhebel dem bewegbaren Möbelteil zugeordnet ist und sich somit am Möbelkorpus abstößt. Bevorzugt ist dazu vorgesehen, dass die Steuerplatte der Antriebsvorrichtung an der Korpusschiene und die Ausstoßhebelgrundplatte an der Ladenschiene oder am bewegbaren Möbelteil, vorzugsweise an einer Unterseite eines Schubladenbodens, befestigt ist.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: ein Möbel mit Ausziehführung und Antriebsvorrichtung,
- Fig. 2: die Ausziehführung mit der Antriebsvorrichtung,
- Fig. 3: die Antriebsvorrichtung bei im Freilauf befindlichem bewegbaren Möbelteil,
- Fig. 4: die Antriebsvorrichtung beim Einziehen des bewegbaren Möbelteils,
- Fig. 5: die Antriebsvorrichtung bei Erreichen der Schließstellung,
- Fig. 6: die Antriebsvorrichtung in der Schließstellung bei geöffnetem zweiten Weg,
- Fig. 7: die Antriebsvorrichtung in der Überdrückstellung,
- Fig. 8: die Antriebsvorrichtung zu Beginn des Ausstoßens entlang des ersten Wegs,
- Fig. 9: die Antriebsvorrichtung während des Ausstoßens,
- Fig. 10: die Antriebsvorrichtung nach dem Ausstoßen und
- Fig. 11: die Antriebsvorrichtung beim Ausstoßen durch Ziehen am bewegbaren Möbelteil.

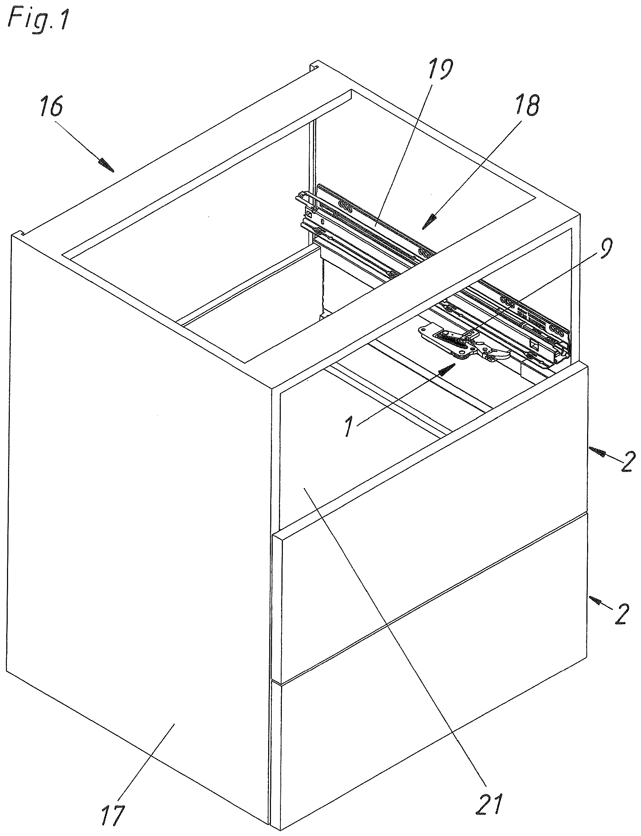

Fig. 1 zeigt das Möbel 16 mit im- Möbelkorpus 17- bewegbar gelagerten Möbelteilen 2. Diese bewegbaren Möbelteile 2 sind über beidseitig am Möbelkorpus 17 angebrachte Ausziehführungen 18 am Möbelkorpus 17 bewegbar befestigt. Die Ausziehführung 18 selbst besteht aus einer am Möbelkorpus 17 befestigten Korpusschiene 19, einer nicht dargestellten Ladenschiene und gegebenenfalls einer Mittelschiene. Das bewegbare Möbelteil 2 ist in diesem Fall eine Schublade mit einem Schubladenbehältnis samt Schubladenboden 21. Die Antriebsvorrichtung 1 ist an der Ausziehführung 18 und an der Unterseite eines Schubladenbodens 21 einer hier nicht dargestellten obersten Schublade befestigt.

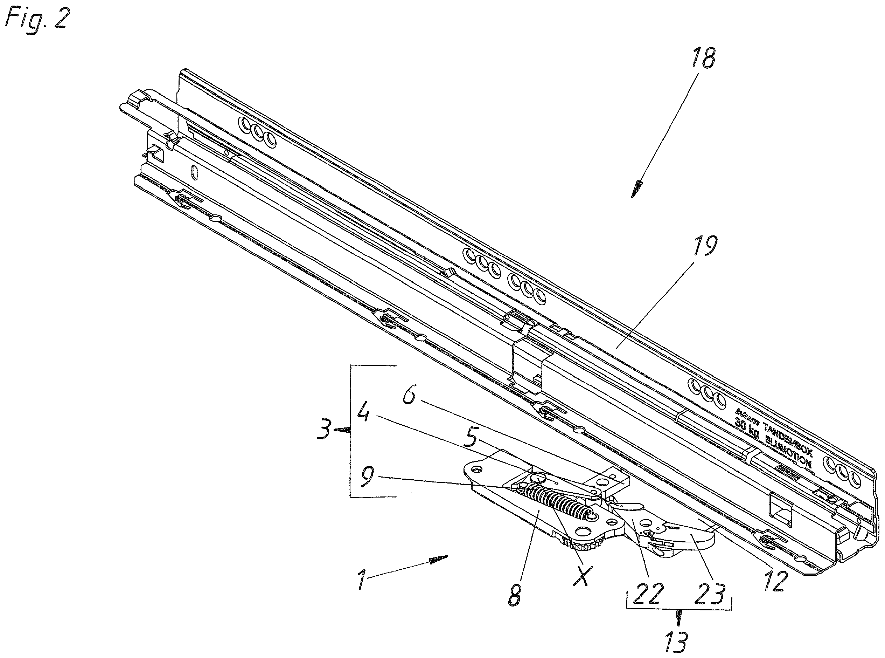

Konkret ist aus Fig. 2 ersichtlich, dass die Steuerplatte 12 an der Korpusschiene 19 montiert ist. An dieser Steuerplatte 12 wiederum ist das Steuerelement 13 linear bewegbar gelagert, wobei dieses Steuerelement 13 einerseits die Steuerbasis 22 und die daran schwenkbar gelagerte Klappe 23 aufweist. Zudem ist an der Steuerplatte 12 die Hauptausstoßfläche 6 ausgebildet. Demgegenüber ist an der Unterseite eines Schubladenbodens 21 die Ausstoßhebelgrundplatte 8 montiert. An dieser Ausstoßhebelgrundplatte 8 ist der Ausstoßhebel 4 um die Schwenkachse X drehbar gelagert. Zwischen dem Ausstoßhebel 4 und der Ausstoßhebelgrundplatte 8 ist der Ausstoßkraftspeicher 9 aufgespannt, der in diesem Fall als Zugfeder ausgebildet ist. Die wesentlichen Komponenten der Ausstoßvorrichtung 3 bilden der Ausstoßkraftspeicher 9, der Ausstoßhebel 4, das Verriegelungselement 5 sowie die Hauptausstoßfläche 6. Das Verriegelungselement 5 ist relativ zur Steuerplatte 12 bewegbar gelagert. Im konkreten Fall ist das Verriegelungselement 5 am Steuerelement 13 bewegbar gelagert und über dieses Steuerelement 13 auch indirekt relativ zur Steuerplatte 12 bewegbar gelagert. Grundsätzlich kann die Ausstoßhebelgrundplatte 8 auch an der Ladenschiene 20 befestigt sein. Auch ist es möglich, dass die Steuerplatte 12 direkt am Möbelkorpus 17 befestigt ist.

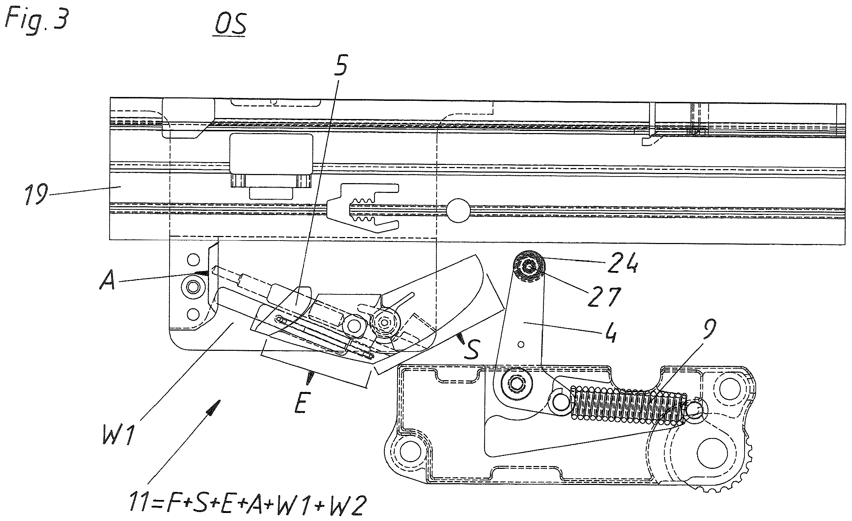

In Fig. 3 befindet sich das bewegbare Möbelteil 2 in einer weit geöffneten Offenstellung OS, bei der sich der Steuerhebel 4 in einem Freilaufabschnitt der Führungsbahn 11 befindet. Die Führungsbahn 11 weist zudem den Spannabschnitt S, den Einziehabschnitt E und den Ausstoßabschnitt A auf. Am Ausstoßhebel 4 ist die Ausstoßrolle 24 über ein Drehlager 27 drehbar gelagert. Der Ausstoßhebel 4 ist vom Ausstoßkraftspeicher 9 kraftbeaufschlagt.

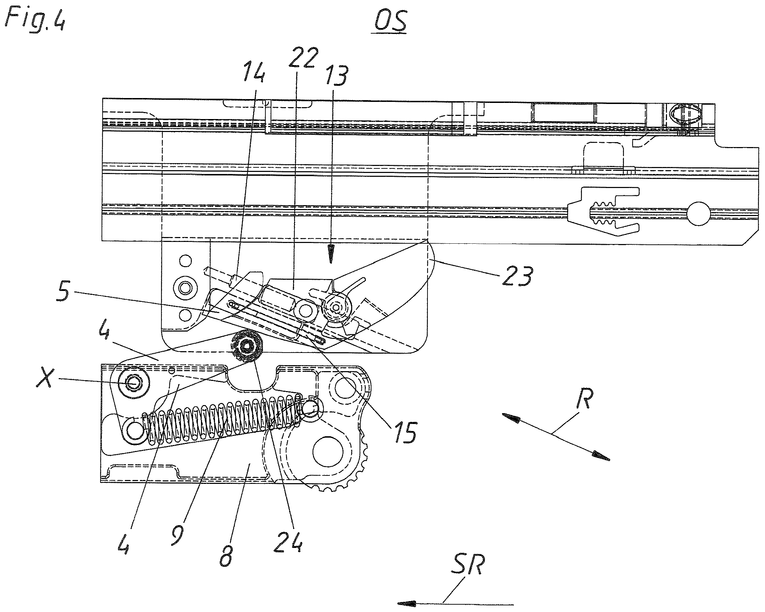

Wenn das bewegbare Möbelteil 2, ausgehend von der Stellung gemäß Fig. 3 in Schließrichtung SR bewegt wird, so gelangt der Ausstoßhebel 4 über die Ausstoßrolle 24 zunächst in Anschlag mit dem Spannabschnitt S des Steuerelements 13 (nicht dargestellt). Da die Federkraft des Ausstoßkraftspeichers 9 höher ist als die Federkraft des Kraftspeichers 14, wird das gesamte Steuerelement 13 entgegen der Richtung R zur Hauptausstoßfläche 6 hin bewegt, wobei der Kraftspeicher 14 gespannt wird. Sobald sich das Steuerelement 13 nicht mehr weiter nach links bewegen kann und gleichzeitig auch noch in Schließrichtung SR auf das bewegbare Möbelteil 2 gedrückt wird, wird der Ausstoßkraftspeicher 9 gespannt, indem sich der Ausstoßhebel 4 im Uhrzeigersinn um die Schwenkachse X dreht. Bei Erreichen der Übergangsposition zwischen dem Spannabschnitt S und dem Einziehabschnitt E ist der Ausstoßkraftspeicher 9 voll gespannt und fungiert anschließend entlang des Einziehabschnittes E als Einziehkraftspeicher (siehe Fig. 4). Da sich der Ausstoßkraftspeicher 9 in seiner Funktion als Einziehkraftspeicher entspannt, wird das bewegbare Möbelteil 2 aktiv in Schließrichtung SR eingezogen. Diese Einziehbewegung kann auch durch eine nicht dargestellte Dämpfvorrichtung gedämpft werden. Aufgrund des relativ starken mechanischen Kontaktes der Ausstoßrolle 24 mit der Steuerbasis 22 wird auch während des Einziehens das Steuerelement 13 weiterhin in der Stellung gehalten, in der der Kraftspeicher 14 für das Steuerelement 13 gespannt bleibt.

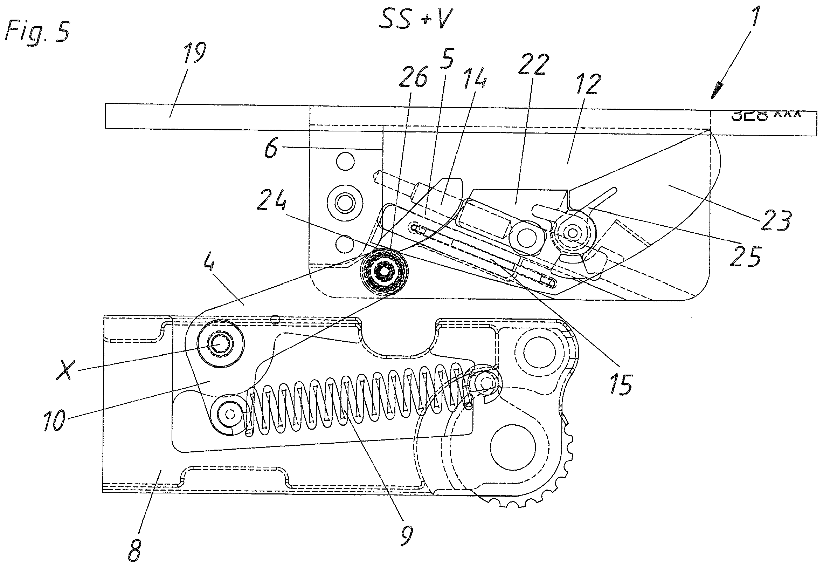

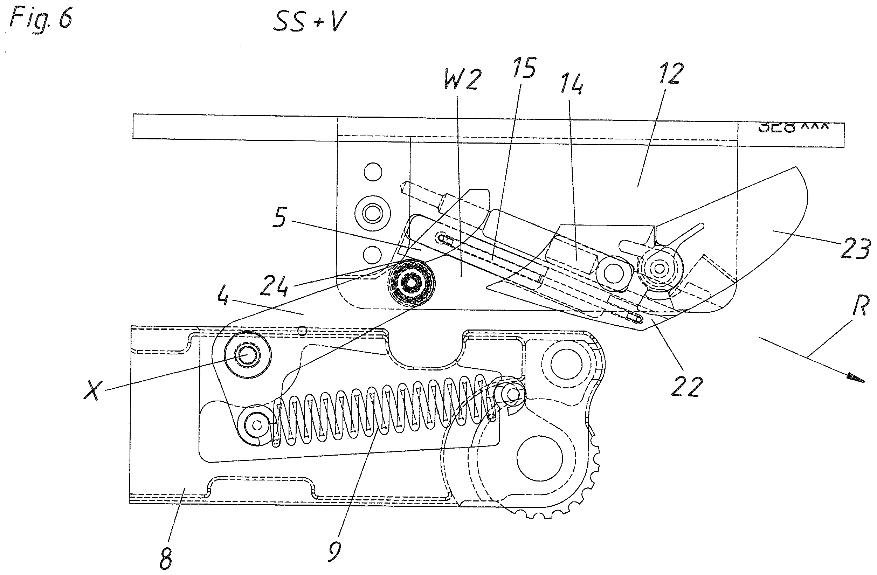

Am Ende der Einziehbewegung gelangt der Ausstoßhebel 4 mitsamt der Ausstoßrolle 24 in die Verriegelungsposition V gemäß Fig. 5. Dies entspricht der Schließstellung SS des bewegbaren Möbelteils. Dabei ist der Ausstoßkraftspeicher 9 wieder zum Teil- entspannt, hat aber noch genug Restenergie für das später folgende Ausstoßen. Wie in Fig. 5 ersichtlich, liegt die Ausstoßrolle 24 kurz nach Beendigung der Einziehbewegung nur mehr an der Verriegelungsfläche 26 des Verriegelungselements 5 an. Dadurch besteht kein mechanischer Kontakt mehr zwischen der Ausstoßrolle 24 und der Steuerbasis 22, wodurch sich der Kraftspeicher 14 entspannen kann und das Steuerelement 13 in die von der Hauptausstoßfläche 6 wegweisende Richtung R bewegt wird (siehe Fig. 6). Da die Ausstoßrolle 24 aber immer noch an der Verriegelungsfläche 26 des Verriegelungselementes 5 anliegt, kann sich dieses Verriegelungselement 5 nicht mit dem Steuerelement 13 in Richtung R mitbewegen, sondern es wird der zwischen der Steuerbasis 22 und dem Verriegelungselement 5 befindliche Kraftspeicher 15 gespannt. Dieser Kraftspeicher 15 weist eine geringe Federkonstante auf als der Kraftspeicher 14. Durch dieses Entspannen des Kraftspeichers 14 wird der zweite Weg W2 zwischen dem Steuerelement 13 und dem Verriegelungselement 5 freigegeben. Das bewegbare Möbelteil 2 befindet sich aber immer noch in der Schließstellung SS, in der der Ausstoßhebel 4 durch das Verriegelungselement 5 in der Verriegelungsposition V gehalten ist.

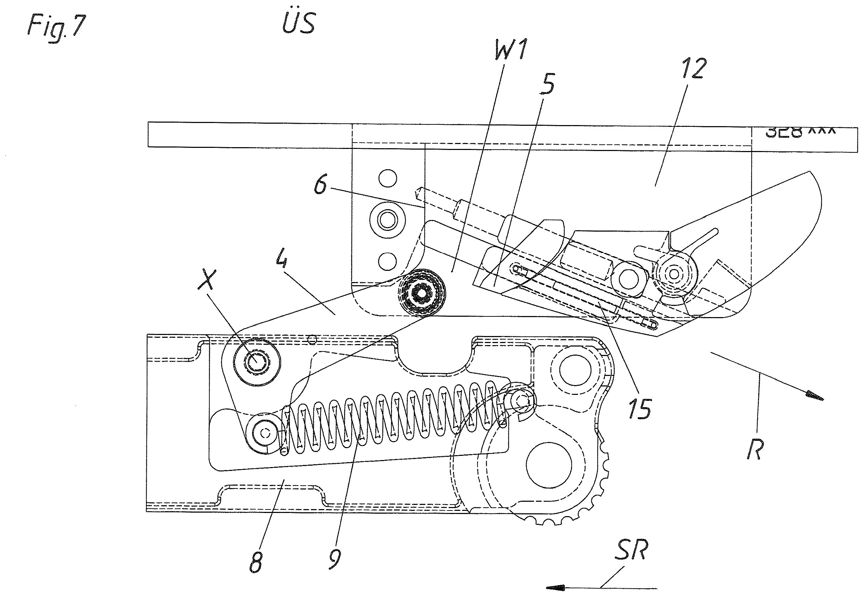

Wenn nun von dieser Stellung ausgehend in Schließrichtung SR auf das bewegbare Möbelteil 2 gedrückt wird, so gelangt das bewegbare Möbelteil 2 in die Überdrückstellung ÜS gemäß Fig. 7. Durch dieses Bewegen in Schließrichtung SR bewegt sich die Ausstoßhebelgrundplatte 8 relativ zur Steuerplatte 12. Da sich der Ausstoßhebel 4 auch mit der Ausstoßhebelgrundplatte 8 mitbewegen muss aber gleichzeitig auch an der Hauptausstoßfläche 6 anliegt, verschwenkt sich der Ausstoßhebel 4 im Uhrzeigersinn um die Schwenkachse X, sodass der mechanische Kontakt zwischen der Ausstoßrolle 24 und der Verriegelungsfläche 26 des Verriegelungselements 5 aufgehoben wird. Dadurch wird das Verriegelungselement 5 nicht mehr vom Ausstoßhebel 4 gehalten und der Kraftspeicher 15 kann das Verriegelungselement 5 in Richtung R ziehen. Dadurch wird der erste Weg W1 zwischen dem Verriegelungselement 5 und der Hauptausstoßfläche 6 freigegeben.

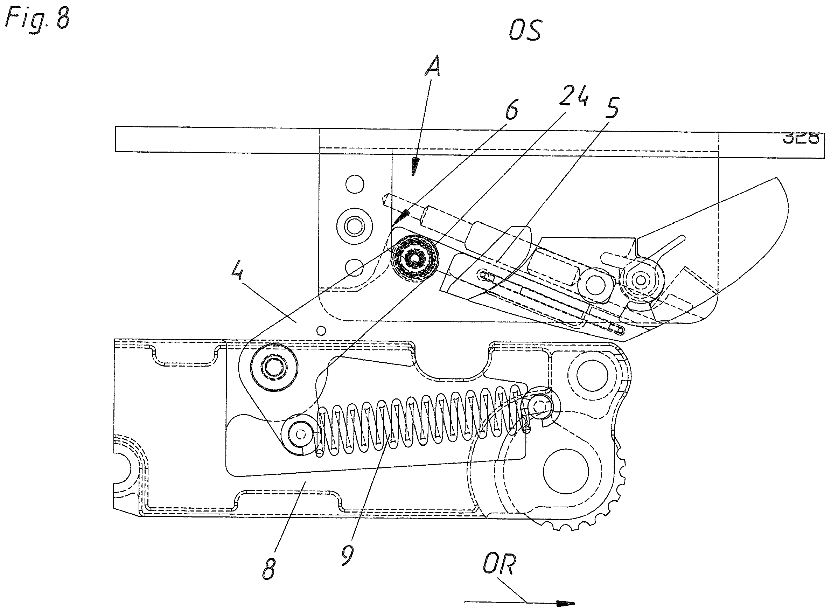

Da nun der Ausstoßabschnitt A für den Ausstoßhebel 4 bzw. die Ausstoßrolle 24 nicht mehr durch das Verriegelungselement 5 versperrt ist, kann sich der Ausstoßkraftspeicher 9 entspannen, wodurch die Ausstoßrolle 24 entlang des ersten Weges W1 in den Ausstoßabschnitt A gemäß Fig. 8 gelangt. Dadurch wird auch die Steuerplatte 8 und mit diesem das bewegbare Möbelteil 2 in Öffnungsrichtung OR bewegt, wodurch sich das bewegbare Möbelteil 2 bereits in einer Offenstellung OS befindet.

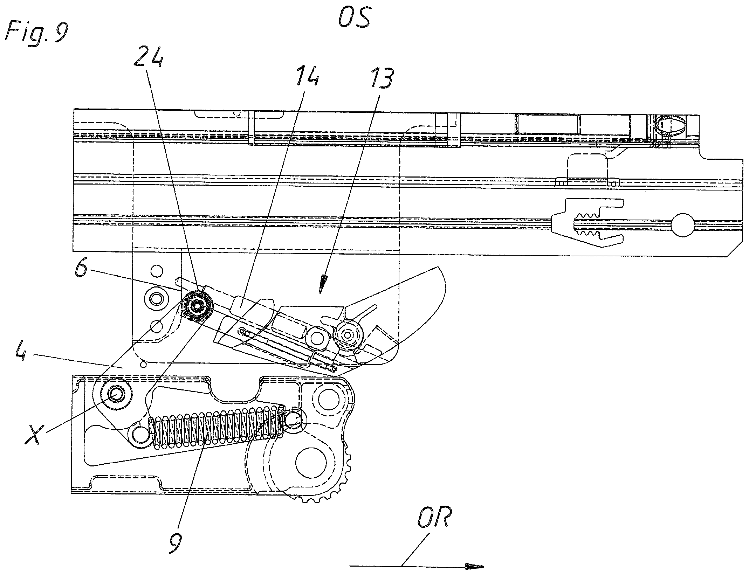

Nach weiterer Entspannung des Ausstoßkraftspeichers 9 ist das bewegbare Möbelteil 2 noch weiter geöffnet und die Ausstoßrolle 24 befindet sich gemäß Fig. 9 ca. in der Mitte der Hauptausstoßfläche 6 bzw. des Ausstoßabschnitts A.

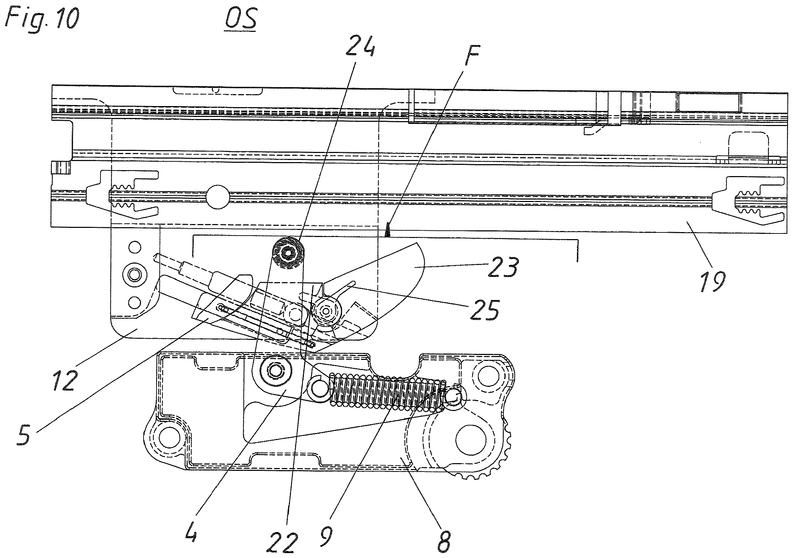

In weiterer Folge hebt die Ausstoßrolle 24 entweder aufgrund des Schwunges der Ausstoßvorrichtung 3 oder durch Ziehen am bewegbaren Möbelteil 2 von der Hauptausstoßfläche 6 ab und gelangt in die Stellung gemäß Fig. 10, in der der Ausstoßkraftspeicher 9 entspannt ist und in der das bewegbare Möbelteil 2 frei beweglich ist. Durch weiteres Ziehen am bewegbaren Möbelteil 2 in Öffnungsrichtung OR gelangt die Antriebsvorrichtung 1 wieder in die Stellung gemäß Fig. 3. Beim Bewegen in Öffnungsrichtung OR wird dabei die Klappe 23 durch die Ausstoßrolle 24 entgegen der Kraft der Schenkelfeder 25 im Uhrzeigersinn gedreht, sodass der Ausstoßhebel 4 in die Stellung gemäß Fig. 3 kommen kann. Danach klappt sich die Klappe 23 aufgrund der Federkraft der Schenkelfeder 25 wieder entgegen dem Uhrzeigersinn, sodass die Ausstoßrolle 24 beim späteren Schließen nicht in den Freilaufabschnitt F zurückfährt sondern in den an der Klappe 23 ausgebildeten Spannabschnitt S gelangt.

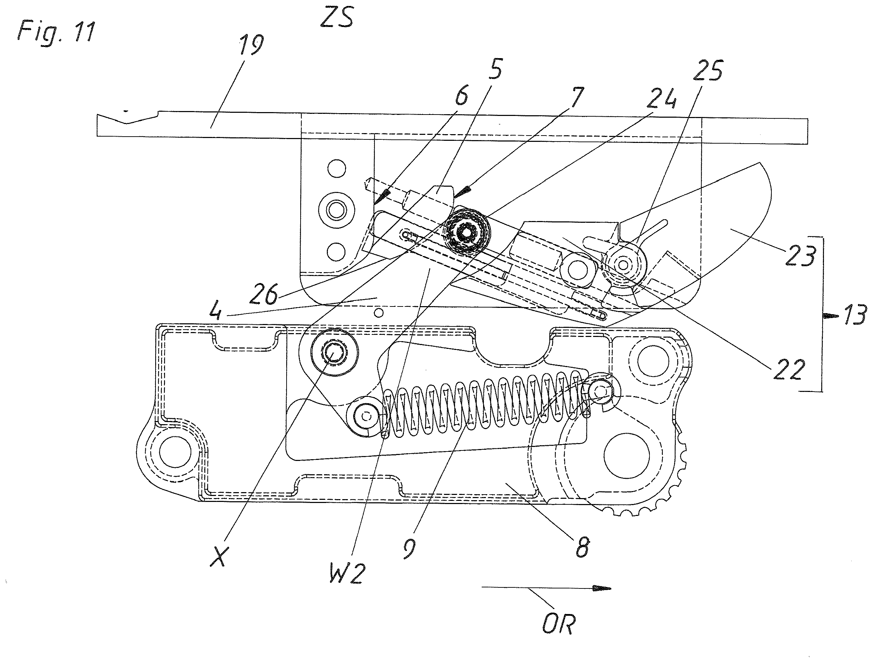

Wenn ausgehend von Fig. 6 eine Entriegelung der verriegelbaren Ausstoßvorrichtung 3 nicht durch Überdrücken sondern durch Ziehen am bewegbaren Möbelteil 2 in Öffnungsrichtung OR erfolgt, so gelangt die Ausstoßrolle 24 über den zweiten Weg W2 in den Ausstoßabschnitt A. Dies ist in Fig. 11 veranschaulicht. Wenn nämlich ausgehend von Fig. 6 am bewegbaren Möbelteil 2 gezogen wird, so gelangt die Ausstoßrolle 24 außer Kontakt mit der Verriegelungsfläche 26 und gelangt in Kontakt mit der am Verriegelungselement 5 ausgebildeten gebogenen zweiten Ausstoßfläche 7. Sobald die Ausstoßrolle 24 in diesen zweiten Weg W2 bzw. in Kontakt mit der gebogen geformten, zweiten Ausstoßfläche 7 gelangt, kann sich der Ausstoßkraftspeicher 9 entspannen und verschwenkt den Ausstoßhebel 4 um die Schwenkachse X unter aktivem Ausstoßen des bewegbaren Möbelteils 2 in Öffnungsrichtung OR. Die gebogene Form der zweiten Ausstoßfläche 7 dient vor allem dazu, dass Schaukelbewegungen des Schubkastens (bewegbares Möbelteil 2) bei einseitigem Auslösen durch Drücken - wenn die auf der anderen Seite des bewegbaren Möbelteils 2 angeordnete, baugleiche Antriebsvorrichtung 1 durch Ziehen nachausgelöst wird - vermieden werden. Durch diese nach vorne gezogene Auswurfkontur wird der Auswurfweg entlang der zweiten Ausstoßfläche 7 bei gleichbleibender Auswurfenergie verlängert. Dies führt dazu, dass die Bewegung des Schubkastens stark verbessert wird. Grundsätzlich soll aber nicht ausgeschlossen werden, dass das Verriegelungselement 5 im Wesentlichen nur die Verriegelungsfläche 26 aufweist, sodass gleich nach dem Entriegeln durch Ziehen die Ausstoßrolle 24 in Kontakt mit der Hauptausstoßfläche 6 gelangt. Bevorzugt ist aber vorgesehen, dass die zweite Ausstoßfläche 7 als Abstoßfläche beim Öffnen durch Ziehen dient. Auch beim Entriegeln durch Ziehen gelangt der Ausstoßhebel 4 und die Ausstoßrolle 24 in weiterer Folge über den Ausstoßabschnitt A und den Freilaufabschnitt F in die Offenstellung OS gemäß Fig. 10.

Durch die vorliegende Erfindung ist somit eine verbesserte Antriebsvorrichtung 1 geschaffen, bei der ein Ausstoßhebel 4 mit Doppelfunktion (Verriegelung und Ausstoßen) nicht nur durch Überdrücken entriegelt werden kann, sondern auch durch Ziehen am bewegbaren Möbelteil 2 in Öffnungsrichtung OR entriegelt wird, sodass der Ausstoßhebel 4 beim Entriegeln durch Ziehen aktiv das bewegbare Möbeltell 2 In Öffnungsrichtung OR ausstößt.

## Patentansprüche

1. Antriebsvorrichtung (1) für ein bewegbares Möbelteil (2), mit einer verriegelbaren Ausstoßvorrichtung (3), wobei die Ausstoßvorrichtung (3) einen kraftbeaufschlagten Ausstoßhebel (4) zum Ausstoßen des bewegbaren Möbelteils (2) entlang eines Ausstoßabschnitts (A) aus einer Schließstellung (SS) in eine Offenstellung (OS) aufweist, wobei der Ausstoßhebel (4) an einer Ausstoßhebelgrundplatte (8) drehbar gelagert ist, wobei ein Ausstoßkraftspeicher (9) den Ausstoßhebel (4) kraftbeaufschlagt und wobei der Ausstoßhebel (4) in der Schließstellung (SS) an einem Verriegelungselement (5) in einer Verriegelungsposition (V) anliegt und wobei durch Bewegen des bewegbaren Möbelteils (2) in eine in Schließrichtung (SR) hinter der Schließstellung (SS) liegende Überdrückstellung (ÜS) die Ausstoßvorrichtung (3) entriegelbar ist, indem das Verriegelungselement (5) einen ersten Weg (W1) in den Ausstoßabschnitt (A) für den Ausstoßhebel (4) freigibt, wobei die Ausstoßvorrichtung (3) durch Ziehen am bewegbaren Möbelteil (2) von der Schließstellung (SS) in eine in Öffnungsrichtung (OR) vor der Schließstellung (SS) liegende Zugentriegelungsstellung (ZS) bringbar ist, wodurch der Ausstoßhebel (4) über einen vom ersten Weg (W1) beabstandeten zweiten Weg (W2) in den Ausstoßabschnitt (A) gelangt.

2. Antriebsvorrichtung nach Anspruch 1, **dadurch gekennzeichnet, dass** vom kraftbeaufschlagten, im Ausstoßabschnitt (A) befindlichen Ausstoßhebel (4) über eine Hauptausstoßfläche (6) das bewegbare Möbelteil (2) in Öffnungsrichtung (OR) bewegbar ist.

3. Antriebsvorrichtung nach Anspruch 1 oder 2, **dadurch gekennzeichnet, dass** entlang des zweiten Wegs (W2) eine von der Hauptausstoßfläche (6) beabstandete zweite Ausstoßfläche (7) ausgebildet ist.

4. Antriebsvorrichtung nach Anspruch 3, **dadurch gekennzeichnet, dass** die zweite Ausstoßfläche (7) am Verriegelungselement (5) ausgebildet ist.

5. Antriebsvorrichtung nach einem der Ansprüche 1 bis 4, **dadurch gekennzeichnet, dass** der Ausstoßkraftspeicher (9) eine an einem Schenkel (10) des Ausstoßhebels (4) angreifende Zugfeder ist.

6. Antriebsvorrichtung nach einem der Ansprüche 1 bis 5, **dadurch gekennzeichnet, dass** die Antriebsvorrichtung (1) eine Führungsbahn (11) für den Ausstoßhebel (4) aufweist, wobei die Führungsbahn (11) einen Freilaufabschnitt (F), einen Spannabschnitt (S) zum Spannen des Ausstoßkraftspeichers (9), einen Einziehabschnitt (E) zum Einziehen des bewegbaren Möbelteils (2) aus einer Offenstellung (OS) in die Schließstellung (SS), den ersten Weg (W1), den zweiten Weg (W2) und den Ausstoßabschnitt (A) aufweist.

7. Antriebsvorrichtung nach Anspruch 6, **dadurch gekennzeichnet, dass** der Spannabschnitt (S) und der Einziehabschnitt (E) vom ersten Weg (W1) und vom zweiten Weg (W2) verschieden sind.

8. Antriebsvorrichtung nach Anspruch 6 oder 7, **gekennzeichnet durch** eine Steuerplatte (12) und ein an der Steuerplatte (12) bewegbar gelagertes Steuerelement (13), wobei das Steuerelement (13) zumindest den Spannabschnitt (15) und den Einziehabschnitt (E) mitbildet.

9. Antriebsvorrichtung nach Anspruch 8, **dadurch gekennzeichnet, dass** das Steuerelement (13) von einem Kraftspeicher (14) beaufschlagt ist, der das Steuerelement (13) in eine von der Hauptausstoßfläche (6) wegweisende Richtung (R) beaufschlagt.

10. Antriebsvorrichtung nach Anspruch 8 oder 9, **dadurch gekennzeichnet, dass** das Verriegelungselement (5) relativ zur Steuerplatte (12) bewegbar, vorzugsweise verschiebbar, gelagert ist.

11. Antriebsvorrichtung nach Anspruch 10, **dadurch gekennzeichnet, dass** das Verriegelungselement (5) am Steuerelement (13) bewegbar gelagert ist.

12. Antriebsvorrichtung nach Anspruch 11, **dadurch gekennzeichnet, dass** das Verriegelungselement (5) von einem das Verriegelungselement (5) in Richtung Steuerelement (13) ziehenden Kraftspeicher (15) beaufschlagt ist.

13. Antriebsvorrichtung nach einem der Ansprüche 10 bis 12, **dadurch gekennzeichnet, dass** der erste Weg (W1) zwischen dem Verriegelungselement (5) und der Hauptausstoßfläche (6) und der zweite Weg (W2) zwischen dem Verriegelungselement (5) und dem Steuerelement (13) angeordnet ist.

14. Möbel (16) mit einem Möbelkorpus (17), einem bewegbaren Möbelteil (2) und einer Antriebsvorrichtung (1) nach einem der Ansprüche 1 bis 13.

15. Möbel nach Anspruch 14, **dadurch gekennzeichnet, dass** das bewegbare Möbelteil (2) am Möbelkorpus (17) über eine Ausziehführung (18) bewegbar gelagert ist, wobei die Ausziehführung (18) zumindest eine Korpusschiene (19) und eine Ladenschiene aufweist.

16. Möbel nach Anspruch 15, **dadurch gekennzeichnet, dass** die Steuerplatte (12) der Antriebsvorrichtung (1) an der Korpusschiene (19) und die Ausstoßhebelgrundplatte (8) an der Ladenschiene oder am bewegbaren Möbelteil (2), vorzugsweise an einer Unterseite eines Schubladenbodens (21), befestigt ist.

## Claims

1. A drive device (1) for a moveable furniture part (2) comprising a lockable ejection device (3), wherein the ejection device (3) has a force-actuated ejection lever (4) for ejection of the moveable furniture part (2) along an ejection portion (A) from a closed position (SS) into an open position (OS), wherein the ejection lever (4) is mounted rotatably to an ejection lever base plate (8), wherein an ejection force storage means (9) provides for force actuation of the ejection lever (4) and wherein the ejection lever (4) in the closed position (SS) bears against a locking element (5) in a locking position (V) and wherein the ejection device (3) is unlockable by movement of the moveable furniture part (2) into an over-pressing position (ÜS) behind the closed position (SS) in the closing direction (SR), by the locking element (5) enabling a first travel path (W1) into the ejection portion (A) for the ejection lever (4), wherein by pulling on the moveable furniture part (2) the ejection device (3) can be moved from the closed position (SS) into a pulling unlocking position (ZS) which is before the closed position (SS) in the opening direction (OR) whereby the ejection lever (4) passes into the ejection portion (A) by way of a second travel path (W2) spaced from the first travel path (W1).

2. A drive device as set forth in claim 1 **characterised in that** the moveable furniture part (2) is moveable in the opening direction (OR) by the force-actuated ejection lever (4) which is in the ejection portion (A) by way of a main ejection surface (6).

3. A drive device as set forth in claim 1 or claim 2 **characterised in that** a second ejection surface (7) spaced from the main ejection surface (6) is provided along the second travel path (W2).

4. A drive device as set forth in claim 3 **characterised in that** the second ejection surface (7) is provided on the locking element (5).

5. A drive device as set forth in one of claims 1 through 4 **characterised in that** the ejection force storage means (9) is a tension spring acting on a leg (10) of the ejection lever (4).

6. A drive device as set forth in one of claims 1 through 5 **characterised in that** the drive device (1) has a guide path (11) for the ejection lever (4), wherein the guide path (11) has a free-running portion (F), a stressing portion (S) for stressing the ejection force storage means (9), a retraction portion (E) for retraction of the moveable furniture part (2) from an open position (OS) into the closed position (SS), the first travel path (W1), the second travel path (W2) and the ejection portion (A).

7. A drive device as set forth in claim 6 **characterised in that** the stressing portion (S) and the retraction portion (E) are different from the first travel path (W1) and the second travel path (W2).

8. A drive device as set forth in claim 6 or claim 7 **characterised by** a control plate (12) and a control element (13) mounted moveably to the control plate (12), wherein the control element (13) also forms at least the stressing portion (15) and the retraction portion (E).

9. A drive device as set forth in claim 8 **characterised in that** the control element (13) is acted upon by a force storage means (14) which acts on the control element (13) in a direction (R) facing away from the main ejection surface (6).

10. A drive device as set forth in claim 8 or claim 9 **characterised in that** the locking element (5) is mounted moveably, preferably slidably, relative to the control plate (12).

11. A drive device as set forth in claim 10 **characterised in that** the locking element (5) is mounted moveably to the control element (13).

12. A drive device as set forth in claim 11 **characterised in that** the locking element (5) is acted upon by a force storage means (15) pulling the locking element (5) in the direction of the control element (13).

13. A drive device as set forth in one of claims 10 through 12 **characterised in that** the first travel path (W1) is arranged between the locking element (5) and the main ejection surface (6) and the second travel path (W2) is arranged between the locking element (5) and the control element (13).

14. An article of furniture (16) having a furniture carcass (17), a moveable furniture part (2) and a drive device (1) as set forth in one of claims 1 through 13.

15. An article of furniture as set forth in claim 14 **characterised in that** the moveable furniture part (2) is mounted moveably to the furniture carcass (17) by way of an extension guide means (18), the extension guide means (18) having at least a carcass rail (19) and a drawer rail.

16. An article of furniture as set forth in claim 15 **characterised in that** the control plate (12) of the drive device (1) is fixed to the carcass rail (19) and the ejection lever base plate (8) is fixed to the drawer rail or the moveable furniture part (2), preferably at an underside of a drawer bottom (21).

## Revendications

1. Mécanisme moteur (1) pour une partie de meuble mobile (2), avec un dispositif d'éjection pouvant être verrouillé (3), dans lequel le dispositif d'éjection (3) présente un levier d'éjection sollicité par une force (4) pour éjecter la partie de meuble mobile (2) le long d'une section d'éjection (A) d'une position de fermeture (SS) à une position d'ouverture (OS), dans lequel le levier d'éjection (4) est logé de façon rotative sur une plaque de base de levier d'éjection (8), dans lequel un accumulateur d'énergie d'éjection (9) exerce une force sur le levier d'éjection (4) et dans lequel le levier d'éjection (4) est adjacent dans la position de fermeture (SS) à un élément de verrouillage (5) dans une position de verrouillage (V) et dans lequel, par déplacement de la partie de meuble mobile (2) dans une position de surpression (ÜS) se situant en position de fermeture (SR) derrière la position de fermeture (SS), le dispositif d'éjection (3) peut être déverrouillé, tandis que l'élément de verrouillage (5) libère un premier trajet (W1) dans la section d'éjection (A) pour le levier d'éjection (4), dans lequel le dispositif d'éjection (3) peut être amené par traction sur la partie de meuble mobile (2) de la position de fermeture (SS) à une position de déverrouillage par traction (ZS) se situant dans le sens d'ouverture (OR) devant la position de fermeture (SS), par lequel le levier d'éjection (4) parvient dans la section d'éjection (A) par un deuxième trajet (W2) distant du premier trajet (W1).

2. Mécanisme moteur selon la revendication 1, **caractérisé en ce que** la partie de meuble mobile (2) peut être déplacée dans le sens d'ouverture (OR) sur une surface d'éjection principale (6) par le levier d'éjection (4) sollicité par une force et se trouvant dans la section d'éjection.

3. Mécanisme moteur selon la revendication 1 ou 2, **caractérisé en ce que** le long du deuxième trajet (W2) est conçue une deuxième surface d'éjection (7) à distance de la surface d'éjection principale (6).

4. Mécanisme moteur selon la revendication 3, **caractérisé en ce que** la deuxième surface d'éjection (7) est conçue sur l'élément de verrouillage (5).

5. Mécanisme moteur selon l'une des revendications 1 à 4, **caractérisé en ce que** l'accumulateur d'énergie d'éjection (9) est un ressort de traction agissant sur une branche (10) du levier d'éjection (4).

6. Mécanisme moteur selon l'une des revendications 1 à 5, **caractérisé en ce que** le mécanisme moteur (1) présente une glissière de guidage (11) pour le levier d'éjection (4), dans lequel la glissière de guidage (11) présente une section de roue libre (F), une section de serrage (S) pour tendre l'accumulateur d'énergie d'éjection (9), une section de tirage (E) pour tirer la partie de meuble mobile (2) d'une position d'ouverture (OS) à la position de fermeture (SS), le premier trajet (W1), le deuxième trajet (W2) et la section d'éjection (A).

7. Mécanisme moteur selon la revendication 6, **caractérisé en ce que** la section de serrage (S) et la section de tirage (E) sont différentes du premier trajet (W1) et du deuxième trajet (W2).

8. Mécanisme moteur selon la revendication 6 ou 7, **caractérisé par** une plaque de commande (12) et un élément de commande (13) logé de façon mobile sur la plaque de commande (12), dans lequel l'élément de commande (13) forme conjointement au moins la section de serrage (15) et la section de tirage (E).

9. Mécanisme moteur selon la revendication 8, **caractérisé en ce que** l'élément de commande (13) est sollicité par un accumulateur d'énergie (14), qui sollicite l'élément de commande (13) dans un sens (R) détourné de la surface d'éjection principale (6).

10. Mécanisme moteur selon la revendication 8 ou 9, **caractérisé en ce que** l'élément de verrouillage (5) est logé de façon mobile par rapport à la plaque de commande (12), de préférence déplaçable.

11. Mécanisme moteur selon la revendication 10, **caractérisé en ce que** l'élément de verrouillage (5) est logé de façon mobile sur l'élément de commande (13).

12. Mécanisme moteur selon la revendication 11, **caractérisé en ce que** l'élément de verrouillage (5) est sollicité par un accumulateur d'énergie (15) tirant l'élément de verrouillage (5) vers l'élément de commande (13).

13. Mécanisme moteur selon l'une des revendications 10 à 12, **caractérisé en ce que** le premier trajet (W1) est disposé entre l'élément de verrouillage (5) et la surface d'éjection principale (6) et le deuxième trajet (W2) est disposé entre l'élément de verrouillage (5) et l'élément de commande (13).

14. Meuble (16) avec un corps de meuble (17), une partie de meuble mobile (2) et un mécanisme moteur (1) selon l'une des revendications 1 à 13.

15. Meuble selon la revendication 14, **caractérisé en ce que** la partie de meuble mobile (2) est logée de façon mobile sur le corps de meuble (17) par une glissière de guidage (18), dans lequel la glissière de guidage (18) présente au moins un rail de corps (19) et un rail de chargement.

16. Meuble selon la revendication 15, **caractérisé en ce que** la plaque de commande (12) du mécanisme moteur (1) est fixée au rail de corps (19) et la plaque de base du levier d'éjection (8) est fixée au rail de chargement ou à la partie de meuble mobile (2), de préférence sur un côté inférieur d'un fond de tiroir (21).
